# EUROPEAN PATENT APPLICATION

(11) **EP 1 502 924 A1**
(43) Date of publication of application: **02.02.2005**
(21) Application number: 03358012.7
(22) Date of filing: 01.08.2003
(51) Int. Cl.: C08F 10/00, C08F 4/642, C08F 4/643

(54) **High activity catalysts for the polymerisation of ethylene prepared with phosphates/phosphites reagents**

(71) Applicant: BP LAVERA SNC, 95866 Cergy Pontoise Cedex (FR)
(72) Inventor: The designation of the inventor has not yet been filed
(74) Representative: De Kezel, Eric

(57) **Abstract**

The present invention relates to an improved supported Ziegler-Natta catalyst especially useful for the olefin polymerisation, said catalyst comprising a carrier, an dialkylmagnesium compound, a phosphite and/or phosphate compound, and one transition metal compound.

## Description

The present invention relates to a method for polymerising olefins, a catalyst for such a polymerisation and a method for producing such a catalyst. A particular aspect of the present invention relates to a method for producing linear low density copolymers of ethylene, hereinafter referred to as "LLDPE" and high density polyethylene, hereinafter referred to as "HDPE".

The present invention is particularly suitable for the co-polymerisation of olefins in the gas phase. Such gas phase polymerisation processes can be conducted for example by introducing the gaseous monomer and comonomer into a stirred and/or gas fluidised bed comprising polyolefin and a catalyst for the polymerisation.
In the gas fluidised bed polymerisation of olefins, the polymerisation is conducted in a fluidised bed reactor wherein a bed of polymer particles is maintained in a fluidised state by means of an ascending gas stream comprising the gaseous reaction monomer. The start-up of such a polymerisation generally employs a bed of polymer particles similar to the polymer which it is desired to manufacture. During the course of polymerisation, fresh polymer is generated by the catalytic polymerisation of the monomer, and polymer product is withdrawn to maintain the bed at more or less constant volume. An industrially favoured process employs a fluidisation grid to distribute the fluidising gas to the bed, and to act as a support for the bed when the supply of gas is cut off. The polymer produced is generally withdrawn from the reactor via a discharge conduit arranged in the lower portion of the reactor, near the fluidisation grid. The fluidised bed consists in a bed of growing polymer particles. This bed is maintained in a fluidised condition by the continuous upward flow from the base of the reactor of a fluidising gas.

The polymerisation of olefins is an exothermic reaction and it is therefore necessary to provide means to cool the bed to remove the heat of polymerisation. In the absence of such cooling the bed would increase in temperature and, for example, the catalyst becomes inactive or the bed commences to fuse. In the fluidised bed polymerisation of olefins, the preferred method for removing the heat of polymerisation is by supplying to the polymerisation reactor a gas, the fluidising gas, which is at a temperature lower than the desired polymerisation temperature, passing the gas through the fluidised bed to conduct away the heat of polymerisation, removing the gas from the reactor and cooling it by passage through an external heat exchanger, and recycling it to the bed. The temperature of the recycle gas can be adjusted in the heat exchanger to maintain the fluidised bed at the desired polymerisation temperature. In this method of polymerising alpha olefins, the recycle gas generally comprises the monomer and comonomer olefins, optionally together with, for example, an inert diluent gas such as nitrogen or a gaseous chain transfer agent such as hydrogen. Thus, the recycle gas serves to supply the monomer to the bed, to fluidise the bed, and to maintain the bed at the desired temperature. Monomers consumed by the polymerisation reaction are normally replaced by adding make up gas or liquid to the polymerisation zone or reaction loop.

Linear low density polyethylene polymers possess properties which distinguish them from other polyethylene polymers such as high density polymers, including homopolymers of polyethylene. Certain of these properties are described in the Anderson et al U.S. Pat. No. 4,076,698.

A primary object of the present invention is to provide an unexpectedly high activity catalyst for the polymerisation of olefins which can yield both LLDPE products and HDPE products exhibiting an improved balance of polymer properties.
Such resins are particularly useful for film, injection moulding and rotational moulding applications.

According to the present invention, there is thus also provided a catalyst composition for the (co-)polymerisation of olefins, preferably ethylene, optionally with an alpha olefin of 3 to 10 carbon atoms, comprising a catalyst precursor and an organoaluminium cocatalyst, wherein the catalyst precursor consists of
1. a solid, porous carrier which is not a magnesium compound,
2. an optional organoaluminum compound,
3. a dialkylmagnesium compound,
4. an optional halogenated compound,
5. a transition metal compound which is different from the optional halogenated compound, and
6. one or more alkylphosphite and/or alkylphospate compound(s).

The supported olefin polymerisation catalyst precursor composition of the present invention is prepared in a multi-step process.

In an optional part of the first preparation step, a mixture of a solid, porous carrier and a non-polar solvent is contacted with at least one organoaluminum compound. Subsequently, the mixture is contacted with at least one dialkylmagnesium compound.
Subsequently, optionally the mixture is contacted with at least one halogenated compound.
This final mixture is called mixture 1.

In the second preparation step, a mixture of at least one transition metal compound and an optional non-polar solvent is contacted with at least one or more alkylphosphite and/or alkylphospate compound(s).

This final mixture is called mixture 2.

In the third preparation step, mixture 1 is contacted with mixture 2.
This results into the catalyst precursor according to the present invention.
The catalyst according to the present invention comprises the catalyst precursor and an organoaluminum cocatalyst.

The resulting activated catalyst composition has very high productivity in the polymerisation of olefins.
The catalyst also produces polymers showing an improved balance of polymer properties within a wide range of densities, especially in the case of HDPE and LLDPE.

An alternative second and third preparation step comprises the sequential impregnation of mixture 1 with the phosphite/phosphate reagent and then transition metal reagent.

In accordance with an aspect of the present invention, supported titanium is incorporated onto a suitable support by impregnating this support with reactive magnesium and utilising this supported reactive magnesium to react with a mixture of tetravalent titanium (i.e. titanium in the plus 4 valence state) and at least one or more alkylphosphite and/or alkylphospate compound(s) in a liquid medium. Unreacted titanium is soluble in this liquid medium, while reacted titanium and supported reactive magnesium are insoluble in this liquid medium.

As used herein, the concept of supporting a material on a carrier is intended to connote the incorporation of material (e.g. magnesium compounds and/or titanium compounds) onto the carrier by physical or chemical means. Accordingly, supported material need not necessarily be chemically bound to the carrier.

Suitable carrier materials which may be treated include solid, porous carrier materials such as silica, alumina and combinations thereof. Such carrier materials may be amorphous or crystalline in form. These carriers may be in the form of particles having a particle size of from about 0.1 micron to about 250 microns, preferably from 10 to about 200 microns, and most preferably from about 10 to about 80 microns. Preferably, the carrier is in the form of spherical particles, e.g. spray dried silica.

The carrier material is also porous. The internal porosity of these carriers may be larger than 0.2 cm³ /g. The specific surface area of these carriers is at least 3m² /g, preferably at least about 50 m² /g, and more preferably from, e.g., about 150 to about 1500 m² /g.

It is desirable to remove physically bound water from the carrier material prior to contacting this material with water-reactive magnesium compounds. This water removal may be accomplished by heating the carrier material to a temperature from about 100°C to an upper limit of temperature represented by the temperature at which change of state or sintering occurs. A suitable range of temperatures may, thus, be from about 100°C to about 800°C, e.g., from about 150°C to about 700°C.

Silanol groups represented by the presence of Si-OH groups in the carrier, may be present when the carrier is contacted with water-reactive magnesium compounds (or optional aluminum reagent) in accordance with an aspect of the present invention. These Si-OH groups may be present at about 0.3 mmoles or more per gram of carrier. Accordingly, an amount of, e.g., from about 0.5 to about 5 mmoles of OH groups per gram of carrier may be present, but a preferred range is from about 0.3 to about 1.5 mmoles of OH groups per gram of carrier. Excess OH groups present in the carrier may be removed by heating the carrier for a sufficient time at a sufficient temperature to accomplish the desired removal. More particularly, for example, a relatively small number of OH groups may be removed by sufficient heating at from about 150°C to about 250°C., whereas a relatively large number of OH groups may be removed by sufficient heating at least 500°C to 800°C, most especially, from about 550°C to about 700°C. The duration of heating may be from 4 to 16 hours. In a most preferred embodiment, the carrier is silica which, prior to the use thereof in the first catalyst synthesis step, has been dehydrated by fluidising it with nitrogen or air and heating at 700°C. for at least 4 hours to achieve a surface hydroxyl group concentration of about 0.6 millimoles per gram. The surface hydroxyl concentration of silica may be determined according to J. B. Peri and A. L. Hensley, Jr., J. Phys. Chem., 72 (8), 2926 (1968). The silica of the most preferred embodiment is a high surface area, amorphous silica (surface area=280 to 350m2 /g; pore volume of 1.5 to 1.7 cm3 /g), and it is a material marketed under the tradename of ES70 by Crosfield. When silica has been dehydrated by fluidising with nitrogen or air and heated at about 700°C for about 5 hours, then the surface hydroxyl concentration is about 0.55 mmols/g.

While heating is a preferred means of removing OH groups inherently present in a carrier such as silica, other removal means are also possible such as chemical means. For example, a desired proportion of OH groups may be reacted with a chemical agent such as a hydroxyl reactive aluminium compound, e.g. triethylaluminum.

Other examples of suitable carrier materials are described in the Graff, U.S. Pat. No. 4,173,547. Note particularly the passage extending from column 3, line 62 to column 5, line 44 of this Graff patent. It is noted that internal porosity of carriers can be determined by a technique termed BET-technique, described by S. Brunauer, P. Emmett and E. Teller in Journal of the American Chemical Society, 60, pp. 209-319 (1938). Specific surface areas of carriers can also be measured in accordance with the above-mentioned BET-technique, with use of the standardised method as described in British Standards BS 4359, Volume 1, (1969).

The carrier material is slurried in a non-polar solvent and the resulting slurry is then optionally but preferably contacted with at least one organoaluminum compound. The organoaluminum compound can be chosen from a range of known alkylaluminiums or alkylaluminium halides including those having the formula AlRₙX₃₋ₙ wherein R is the same or different and is an alkyl group, X is a halide and n = 0,1,2 or 3. Trialkylaluminium compounds are preferred, triethylaluminium being the most preferred compound.

The slurry of the carrier material in the solvent is prepared by introducing the carrier into the solvent, preferably while stirring, and heating the mixture to about 15°C to about 100°C, preferably to about 15°C to about 55°C. The slurry is then contacted optionally with the aforementioned organoaluminium compound and with the aforementioned dialkylmagnesium compound, while the heating is continued at the aforementioned temperature.

The dialkylmagnesium compound has preferably the empirical formula RₘMg R'ₙ
where R and R' are the same or different alkyl groups, preferably C2 -C12 alkyl groups, preferably C4 -C10 alkyl groups, more preferably C4 -C8 alkyl groups, and most preferably both R and R' are butyl groups, and m and n are each 0, 1 or 2, providing that m+n is 2. Butylethylmagnesium, butyloctylmagnesium and dibutylmagnesium are preferably used according to the present invention, dibutylmagnesium being the most preferred.

The magnesium containing carrier slurry is then optionally contacted with at least one halogenated compound. The halogenated compound is preferably a monohalogenated hydrocarbon compound; it may be a chlorinated or brominated hydrocarbon. It may be a monohalogenated hydrocarbon compound of general formula R-X in which R denotes an alkyl group containing from 1 to 10, preferably from 2 to 7 carbon atoms, an aralkyl or aryl group containing from 6 to 14, preferably from 6 to 10 carbon atoms, and X denotes a halogen atom such as chlorine or bromine. Preferably, the monohalogenated hydrocarbon compound is chosen amongst methylene chloride, ethyl chloride, propyl chloride, butyl chloride, pentyl chloride, hexyl chloride and heptyl chloride. Butyl chlorides are more preferred, tertiary butyl chloride being the most preferred monohalogenated hydrocarbon compound.
This contacting step is usually conducted at a temperature comprised between 15°C and 100°C, preferably between 15°C and 60°C. The chlorinated compound is added to the slurry in an amount such to provide a molar ratio of (Cl : Mg ) of 0.1 to 4.0 , preferably about 0.1 to about 3.0 , more preferably about 0.1 to 2.5.

Suitable non-polar solvents are materials in which all of the reactants used herein, e.g., the organoaluminium compound, the dialkylmagnesium compound, the halogenated compound and the transition metal compound, are at least partially soluble. Preferred non-polar solvents are alkanes, such as isopentane, hexane, n-heptane, octane, nonane, and decane, although a variety of other materials including cycloalkanes, such as cyclohexane, aromatics, such as benzene and ethylbenzene, may also be employed. The most preferred non-polar solvents are isopentane, hexane, and heptane. Prior to use, the non-polar solvent should be purified, such as by percolation through silica gel and/or molecular sieves, to remove traces of water, oxygen, polar compounds, and other materials capable of adversely affecting catalyst activity.

The amount of tetravalent titanium compound should be sufficient to incorporate a catalytically effective amount of titanium on the carrier in the manner set forth hereinbelow. When a liquid containing an dialkylmagnesium compound is contacted with a carrier, the amount of magnesium in this liquid in terms of mmoles may be essentially the same as that stated above with respect to that which is impregnated onto the carrier.

As described hereabove in the second preparation step, a mixture of at least one transition metal compound and a non-polar solvent is contacted with at least one or more alkylphosphite and/or alkylphospate compound(s).This step is preferably conducted at about 15°C to about 70°C, preferably at about 15°C to about 40°C. Suitable transition metal compounds used herein are compounds of metals of Groups 4, 5, or 6 as adopted by the new IUPAC notation, providing that such compounds are soluble in the non-polar solvents. Non-limiting examples of such compounds are titanium halides, e.g., titanium tetrachloride, titanium alkoxides e.g., where the alkoxide moiety contains an alkyl radical of 1 to 6 carbon atoms or combinations, vanadium halides, and vanadium alkoxides. The preferred transition metal compounds are titanium compounds, preferably tetravalent titanium compounds. The most preferred titanium compound is titanium tetrachloride. Mixtures of such transition metal compounds may also be used and generally no restrictions are imposed on the transition metal compounds which may be included. Any transition metal compound that may be used alone may also be used in conjunction with other transition metal compounds.
Suitable alkylphosphite and alkylphosphate compounds used in the present invention have respectively the following general formulae

XₐP(OR)_{b}

XₐP(O)(OR)_{b}

wherein a = 0 to 3 and b = 3-a
X is an halogen, a hydrocarbyl or hydrogen, and
R is an hydrocarbyl.

Preferably, a = 0 (i.e. b=3) and R is chosen amongst methyl, ethyl, butyl, octyl, phenyl, tolyl. Diethyl or dibutyl chloro phosphite or phosphate can also advantageously be used.

The most preferred compound is tributyl phosphite.

In a preferred embodiment, the amount of the transition metal compound added is not greater than that which can be deposited onto the carrier. Said transition metal loading is preferably comprised between 0.05 and 3 mmol of transition metal per g of carrier, e.g. SiO₂. The exact molar ratio of Mg to the transition metal and of the transition metal to the hydroxyl groups of the carrier will therefore vary (depending, e.g., on the carrier drying temperature) and must be determined on a case-by-case basis. For example, for the silica carrier heated at about 200°C to about 850°C, the amount of the transition metal compound is such that the molar ratio of the transition metal, derived from the transition metal compound, to the hydroxyl groups of the carrier is about 0.01 to about 2.0, preferably about 1.3 to about 2.0. Usually, the amount of the transition metal compound is also such that the molar ratio of Mg to the transition metal is about 0.5 to about 3, preferably about 1 to about 2.

As described hereabove in the third preparation step, mixture 1 is contacted with mixture 2.This results into the catalyst precursor according to the present invention.

The reaction of the transition metal compound, such as the tetravalent titanium compound, in the liquid medium conveniently takes place by contacting the solid carrier containing the reactive magnesium species in a solution (mixture 1) with the mixture 2 (tetravalent titanium compound and phosphate and/or phosphite compound) while heating the reaction medium to a suitable reaction temperature. Preferred solvents are hexane or isopentane or heptane.

The supported catalyst precursor formed from the components described above is then activated with suitable activators. Suitable activators include organometallic compounds. Preferably, the activators are organoaluminum compounds, preferably trialkylaluminum compounds which contain alkyl groups of 1 to 6 carbon atoms, preferably of 1 to 4. More preferably, the activators are triethylaluminum, triisobutyl aluminum or trimethylaluminum.

The catalyst may be activated in situ by adding the activator and catalyst precursor separately to the polymerisation medium. It is also possible to combine the catalyst precursor and activator before introduction into the polymerisation medium, e.g., for up to about 2 hours at a temperature from about -40°C to about 80°C.

A suitable activating amount of the activator may be used. The number of moles of activator per gram atom of titanium in the catalyst may be, e.g., from about 1 to about 100 and is preferably greater than about 5.

In one embodiment of the present invention, olefin(s), preferably ethylene or propylene or combinations thereof are prepolymerised in the presence of the catalyst or catalyst system of the present invention prior to the main polymerisation. The prepolymerisation can be carried out batchwise or continuously in gas, solution or slurry phase including at elevated pressures. The prepolymerisation can take place with any olefin monomer or combination and/or in the presence of any molecular weight controlling agent such as hydrogen. For details on prepolymerisation see U.S. Pat. Nos. 4,923,833, 5,283,278 and 4,921,825 and EP-B-0279 863 all of which are herein fully incorporated by reference.

In another embodiment of the invention, the supported catalyst system of the invention includes an antistatic agent, for example, those described in U.S. Pat. No. 5,283,278, which is fully incorporated herein by reference. Non-limiting examples of antistatic agents include, alcohol, thiol, silanol, diol, ester, ketone, aldehyde, acid, amine, and ether compounds. Tertiary amines, ethoxylated amines, and polyether compounds are preferred. The antistatic agent can be added at any stage in the formation of the supported catalyst system of the invention.

In another embodiment of the invention, the supported catalyst system of the invention includes a polyolefin wax or tackifier or the like.

Olefins may be polymerised with the catalysts prepared according to aspects of the present invention by any suitable process. Such processes include polymerisation's carried out in suspension, in solution or in the gas phase. Gas phase polymerisation's are preferred such as those taking place in stirred bed reactors and, especially, fluidised bed reactors.

The process according to the present invention is thus particularly suitable for the manufacture of polymers in a continuous gas fluidised bed process. In an advantageous embodiment of this invention, the polymer is a polyolefin preferably copolymers of ethylene and/or propylene and/or butene. Preferred olefins used in combination with ethylene and/or propylene and/or butene in the process of the present invention are those having from 4 to 8 carbon atoms. However, small quantities of alpha olefins having more than 8 carbon atoms, for example 9 to 40 carbon atoms (e.g. a conjugated diene), can be employed if desired. Thus it is possible to produce copolymers of ethylene and/or propylene and/or butene with one or more C4-C8 alpha-olefins. The preferred alpha-olefins are but-1-ene, pent-1-ene, hex-1-ene, 4-methylpent-1-ene, oct-1-ene and butadiene. Examples of higher olefins that can be copolymerised with the primary ethylene and/or propylene monomer, or as partial replacement for the C4-C8 monomer are dec-1-ene and ethylidene norbornene. According to a preferred embodiment, the process of the present invention preferably applies to the manufacture of polyolefins in the gas phase by the copolymerisation of ethylene with but-1-ene and/or hex-1-ene and/or 4-methylpent-1-ene.
The process according to the present invention may advantageously be used to prepare a wide variety of polymer products for example linear low density polyethylene (LLDPE) based on copolymers of ethylene with but-1-ene, 4-methylpent-1-ene or hex-1-ene and high density polyethylene (HDPE) which can be for example copolymers of ethylene with a small portion of higher alpha olefin, for example, but-1-ene, pent-1-ene, hex-1-ene or 4-methylpent-1-ene.

When liquid condenses out of the recycle gaseous stream, it can be a condensable monomer, e.g. but-1-ene, hex-1-ene, 4-methylpent-1-ene or octene used as a comonomer, and/or an optional inert condensable liquid, e.g. inert hydrocarbon(s), such as C4-C8 alkane(s) or cycloalkane(s), particularly butane, pentane or hexane. Ethane or propane may also be used as inert hydrocarbons.
The process is particularly suitable for polymerising olefins at an absolute pressure of between 0.5 and 6 MPa and at a temperature of between 30°C and 130°C. For example for LLDPE production the temperature is suitably in the range 75-100°C and for HDPE the temperature is typically 80-120°C depending on the activity of the catalyst used and the polymer properties desired.

The polymerisation is preferably carried out continuously in a vertical fluidised bed reactor according to techniques known in themselves and in equipment such as that described in European patent application EP-0 855 411, French Patent No. 2,207,145 or French Patent No. 2,335,526. The process of the invention is particularly well suited to industrial-scale reactors of very large size.
In one embodiment the reactor used in the present invention is capable of producing greater than 300 Kg/hr to about 80,000 Kg/hr or higher of polymer, preferably greater than 10,000 Kg/hr.

It is essential to operate the fluid bed reactor at a temperature below the sintering temperature of the polymer particles. For the production of ethylene copolymers in the process of the present invention an operating temperature of about 30°C to 115°C is preferred. Temperatures of about 75°C to 90°C are used to prepare products having a density of about 0.91 to 0.92, and temperatures of about 80°C to 100°C are used to prepare products having a density of about 0.92 to 0.94, and temperatures of about 90°C to 115°C are used to prepare products having a density of about 0.94 to 0.96.

The fluid bed reactor is operated at pressures of up to about 1000 psi, and is preferably operated at a pressure of from about 150 to 350 psi, with operation at the higher pressures in such ranges favouring heat transfer since an increase in pressure increases the unit volume heat capacity of the gas.

The partially or completely activated catalyst is injected into the bed at a rate equal to its consumption. The production rate of the bed is controlled by the rate of catalyst injection. The production rate may be increased by simply increasing the rate of catalyst injection and decreased by reducing the rate of catalyst injection.

Since any change in the rate of catalyst injection will change the rate of generation of the heat of reaction, the temperature of the recycle gas is adjusted upwards or downwards to accommodate the change in rate of heat generation. This insures the maintenance of an essentially constant temperature in the bed.

The molecular weight of the polymer may be controlled in a known manner, preferably by using hydrogen. With the catalysts produced according to aspects of the present invention, molecular weight may be suitably controlled with hydrogen when the polymerisation is carried out at relatively low temperatures, e.g., from about 30°C to about 115°C. This control of molecular weight may be evidenced by a measurable positive change in melt index (I₂) for the polymer produced.

The catalysts prepared according to aspects of the present invention are highly active and are useful for the production of both linear low density and high density polyethylene polymers. Such linear low density polyethylene polymers may have a density of 0.94 g/cc or less, preferably 0,930 or less or even 0.925 g/cc or less. In accordance with certain aspects of the present invention, it is possible to achieve densities of less than 0.915 g/cc and even 0.900 g/cc or less.

Advantageous properties of linear low density polyethylene polymers are described in the Anderson et al U.S. Pat. No. 4,076,698. These linear low density polyethylene polymers may be polymers of ethylene with one or more C₃ -C₁₀ alpha-olefins. Thus, copolymers having two monomeric units are possible as well as terpolymers having three monomeric units. Particular examples of such polymers include ethylene/1-butene copolymers, ethylene/1-hexene copolymers, ethylene/4-methyl-1-pentene copolymers, ethylene/1-butene/1-hexene terpolymers, ethylene/propylene/1-hexene terpolymers and ethylene/propylene/1-butene terpolymers. When propylene is employed as a comonomer, the resulting linear low density polyethylene polymer preferably has at least one other alphaolefin comonomer having at least four carbon atoms in an amount of, e.g. at least 1 percent by weight of the polymer. Accordingly, ethylene/propylene copolymers are possible, but not preferred.

The molecular weight distribution of the polymers prepared in the presence of the catalysts of the present invention, as expressed by the MFR values, varies from about 20 to 35 for LLDPE products having a density of about 0.900 to about 0.940 g/cc, and an I₂ (melt index) of about 0.1 to about 100. As is known to those skilled in the art, such MFR values are indicative of a relatively narrow molecular weight distribution of the polymer. As is also known to those skilled in the art, such MFR values are indicative of polymers especially suitable for injection moulding applications since polymers having such MFR values exhibit relatively low amounts of warpage and shrinkage on cooling of the injection moulded products. The relatively low MFR values of polymers prepared with the catalysts of this invention also indicate that they are suitable for the preparation of various film products since such films are likely to have excellent strength properties.

The linear low density polyethylene polymers produced in accordance with certain aspects of the present invention preferably contain at least about 80 percent by weight of ethylene units. Most preferably, the linear low density copolymers of the invention contain at least 2 weight percent, for example from 2 to 20 weight percent of an alpha olefin copolymerised therein.

The molecular weight distribution of the polymers prepared in the presence of the catalysts of the present invention, as expressed by the MFR values, varies from about 20 to 35 for LLDPE products having a density of about 0.900 to about 0.940 g/cc, and an I₂ (melt index) of about 0.1 to about 100. As is known to those skilled in the art, such MFR values are indicative of a relatively narrow molecular weight distribution of the polymer. As is also known to those skilled in the art, such MFR values are indicative of polymers especially suitable for injection moulding applications since polymers having such MFR values exhibit relatively low amounts of warpage and shrinkage on cooling of the injection moulded products. The relatively low MFR values of polymers prepared with the catalysts of this invention also indicate that they are suitable for the preparation of various film products since such films are likely to have excellent strength properties.

The following Example give examples of reactants and parameters which may advantageously be used in accordance with aspects of the present invention.

### EXAMPLE

All manipulations were carried out using air free techniques.

### CATALYST PRECURSOR PREPARATION

### Examples 1

Into a 1 litre vessel, equipped with stirrer, was placed 15g silica (previously calcined to 600°C for 6hr under N2) and 50ml hexane. The slurry was stirred at 250rpm and 25°C. Triethylaluminum (15 mmols) was added to this slurry at 25°C and the mixture was stirred for 30 minutes. Next dibutylmagnesium (18.9 mmols) was added to the suspension at 25°C, the reactor contents stirred for 2 hours, then tBuCl (37.8 mmols) was added and the slurry stirred for a further 2 hours. In a separate reaction vessel a hexane solution of TiCl4 (22.5 mmol, 1M solution in hexane) was mixed with P(OBu)3 (12.6 mmol) and stirred for 30 minutes. An aliquot of the titanium solution containing 15mmol Ti was added to the silica containing reaction slurry and stirred at 25°C for 2 hours. The volatile components were removed by vacuum to yield a free flowing powder

### POLYMERIZATION

### LLDPE Test

Ethylene/1-hexene copolymers were prepared with these catalyst precursors and the cocatalyst triethylaluminum (TEAL). The procedure is described below.

A 5 liter stainless-steel autoclave equipped with a magnet stirrer was filled with hexane (1200 ml) and 1.0 mmol of cocatalyst at ambient temperature. The reactor was briefly vented to lower the pressure, closed and the stirring increased to 700 rpm. Hexene was then introduced, sufficient to give LLDPE product (<0.920 density), and the temperature was increased to 85°C. The internal pressure was raised with hydrogen (sufficient to give melt index between 1 and 7) and then ethylene (2.8bar) was introduced. Catalyst precursor was then injected using ethylene, such that the total ethylene pressure was between 4 and 5 bar. The polymerization reaction was carried out for 1 hour and then the ethylene supply was stopped. The reactor was allowed to cool to ambient temperature and the polyethylene was collected and dried in air overnight. Given in Table 1 are the catalyst productivity, polymer flow index and MFR value, and density of the polymer.

**Table 1**

| **Example** | **Catalyst** | **PC2H4 bar** | **PH2 bar** | **C6 vol (mls)** | **Activity gPoly/g/hr/b** | **I2(2,16)** | **MFR(21,6/2,16) powder** | **Density(g/cc) powder** |
|---|---|---|---|---|---|---|---|---|
| **1** | **PAB38** | **4** | **0,7** | **275** | **410** | **0,64** | **27,6** | **918** |

## Claims

1. Catalyst composition for the (co-)polymerisation of olefins, preferably ethylene, optionally with an alpha olefin of 3 to 10 carbon atoms, comprising a catalyst precursor and an organoaluminium cocatalyst, wherein the catalyst precursor consists of:
a. a solid, porous carrier which is not a magnesium compound,
b. an optional organoaluminum compound,
c. a dialkylmagnesium compound,
d. an optional halogenated compound,
e. a transition metal compound which is different from the optional halogenated compound, and
f. one or more alkylphosphite and/or alkylphospate compound(s).
